# EUROPÄISCHE PATENTSCHRIFT

(11) **EP 3 143 278 B1**
(45) Veröffentlichungstag und Bekanntmachung des Hinweises auf die Patenterteilung: **29.08.2018**
(21) Anmeldenummer: 15733738.7
(22) Anmeldetag: 02.07.2015
(51) Int. Cl.: F03D 13/00, F03D 15/00

(54) **WINDKRAFTANLAGE MIT DIREKT ANGETRIEBENEM GENERATOR**
WIND POWER PLANT WITH DIRECTLY DRIVEN GENERATOR
ÉOLIENNE À GÉNÉRATEUR À ENTRAÎNEMENT DIRECT

(30) Priorität: 18.07.2014 EP 14177660
(43) Veröffentlichungstag der Anmeldung: 22.03.2017
(73) Patentinhaber: Siemens Aktiengesellschaft, 80333 München (DE)
(72) Erfinder: HARTMANN, Ulrich, 14197 Berlin (DE)
(86) Internationale Anmeldenummer: PCT/EP2015/065073
(87) Internationale Veröffentlichungsnummer: WO 2016/008733

(56) Entgegenhaltungen:
- EP-A1- 1 985 846
- EP-A1- 2 740 934
- WO-A1-2004/027260
- WO-A2-2010/140848
- ES-A1- 2 277 795

## Beschreibung

Die Erfindung betrifft eine Windkraftanlage mit einem Generator und einem Lagerkonzept zur Lagerung der Windturbinenwelle als auch ein Verfahren zur Positionierung eines Generators in der Windkraftanlage.

Bei Windkraftanlagen wird der Generator über ein Getriebe oder direkt über die Windturbinenwelle angetrieben. Dabei kann der Generator in Windrichtung betrachtet entweder vor dem Turm (EP 2 164 154 A1), auf dem Turm oder hinter dem Turm (EP 1 327 073 B1) angeordnet sein. Dabei sind unterschiedlichste Lagereinheiten einzusetzen um die rotierenden Teile abstützen und um einen dementsprechenden Biegeverlauf der Turbinenwelle unbeschadet zu überstehen.

Ausgehend davon liegt der Erfindung die Aufgabe zugrunde, für Windkraftanlagen ein Generatorkonzept vorzusehen, dass die Lagereinheiten auf ein Minimum reduziert bei gleichzeitiger technischer Zuverlässigkeit und Wirtschaftlichkeit. Bekannt aus dem Stand der Technik sind z.B. ES 2 277 795, WO 2004/027260 und EP 2 740 934. Die Lösung der gestellten Aufgabe gelingt durch eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle einstückig ausgebildet und/oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse gemäß Anspruch 1 positioniert ist.

Die Lösung der gestellten Aufgabe gelingt auch durch ein Verfahren zur Montage eines Generators an eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle insbesondere einstückig ausgebildet oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse positioniert ist. durch folgende Schritte:
- korrespondierende Segmente von Stator und Rotor werden vorgefertigt und paarweise, d.h. jeweils ein Statorsegment und ein Rotorsegment mit einer Transportsicherung versehen, die insbesondere dem Luftspalt des späteren Generators entspricht,
- Zusammensetzen der Segmentpaare zu einem Generator am Fuße der Windkraftanlage, wobei der Generator dann als Ganzes an der axialen Verlängerung der Windturbinenwelle fixiert wird,
- Fixieren der Statorsegmente am Maschinengehäuse der Windkraftanlage und anschließendes Lösen der Transportsicherungen der Segmentpaare.

Die Lösung der gestellten Aufgabe gelingt auch durch ein Verfahren zur Montage eines Generators an eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle insbesondere einstückig ausgebildet oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse positioniert ist. durch folgende Schritte:
- korrespondierende Segmente von Stator und Rotor werden vorgefertigt und paarweise, d.h. jeweils ein Statorsegment und ein Rotorsegment mit einer Transportsicherung versehen, die insbesondere dem Luftspalt des späteren Generators entspricht,
- Ansetzen der Segmentpaare direkt an die Windturbinenwelle, wobei sich der Generator an der axialen Verlängerung der Windturbinenwelle Schritt für Schritt ergibt,
- Fixieren der Statorsegmente am Maschinengehäuse der Windkraftanlage und anschließendes Lösen der Transportsicherungen der Segmentpaare.

Die Lösung der gestellten Aufgabe gelingt auch durch ein Verfahren zur Montage eines Generators an eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle insbesondere einstückig ausgebildet oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse positioniert ist. durch folgende Schritte:
- der Generator wird im Werk vorgefertigt und mit einer Generatorwelle oder einer Tragstruktur des Rotors und vor Ort direkt an die axiale Verlängerung der Windturbinenwelle gesetzt.
- Fixieren des Stators am Maschinengehäuse der Windkraftanlage.

Erfindungsgemäß wird nunmehr der Generator in Windrichtung betrachtet hinter dem Turm ohne eigene Lagerung angeordnet. D.h., es gibt lediglich zwei Hauptlager, die die Windturbinenwelle halten, fixieren und lagern. Der Stator des Generators ist dabei axial und/oder in Umfangsrichtung fest mit dem Maschinengehäuse verbunden, der Rotor ist mit der Turbinenwelle verbunden. Dabei ist entweder der Rotor direkt auf die Verlängerung der Turbinenwelle positioniert oder der Rotor wird mit seiner eigenen Generatorwelle axial an die Windturbinenwelle angeflanscht.

Vorteilhafterweise ist der Stator über eine einstellbare Befestigung am Maschinengehäuse fixiert, was eine Montage insbesondere von segmentiertem Generator und/oder Rotorsegmenten wesentlich erleichtert. Dies ist notwendig, damit der Luftspalt des Generators einfach und exakt eingestellt werden kann. Bevor der Generator auf der Anlage montiert ist, positionieren Transportvorrichtungen die Lage des Rotors gegenüber dem Stator bzw. die Lage der Rotorsegmente gegenüber den jeweiligen Statorsegmenten. Diese Transportsicherungen werden nach erfolgter Montage des Generators demontiert.

Durch die Transportsicherungen ist eine Koaxialität von Rotor und Stator auch ohne Lager sichergestellt. Die Montage des Generators auf die Turbinenwelle kann dann z.B. über eine Zentrierung des Rotors auf der Turbinenwelle erfolgen.

Sowohl der Rotor als auch der Stator sind dabei vorzugsweise in segmentierte Bauform beispielsweise jeweils aus vier Segmenten ausgeführt.

Vorteilhafterweise werden dabei die Segmente paarweise bereitgestellt. D.h., ein Statorsegment und ein Rotorsegment werden zusammen als eine Einheit geliefert, was unter anderem den Vorteil beinhaltet, dass die Permanentmagnete auf dem Rotor durch den Stator bereits magnetisch abgeschirmt sind.

Erfindungsgemäß können die korrespondierenden Segmente vor Ort bereits zu einem Generator zusammengesetzt werden und anschließend axial an die Turbinenwelle oben am Turm angebracht werden. Ebenso ist es möglich Einzelsegmente des Generators jeweils oben an die Turbinenwelle auf die jeweils vorgesehenen Tragstrukturen zu positionieren.

Ein derartiges Anlagenkonzept eignet sich insbesondere für Windkraftanlagen kleinerer und mittlerer Leistung, z.B. 0,5 bis 4 MW. Durch dieses erfindungsgemäße Anlagenkonzept wird aufgrund der fehlenden Generatorlagerung das Ausfallrisiko einer Lagerung reduziert, ebenso steigert sich die Wirtschaftlichkeit, da weniger Lagerstellen, weniger Kosten und einen geringeren Fertigungsaufwand bedeuten. Ebenso reduziert sich aufgrund der vergleichsweise geringeren Anzahl der Lagerstellen der Wartungsaufwand der Windkraftanlage.

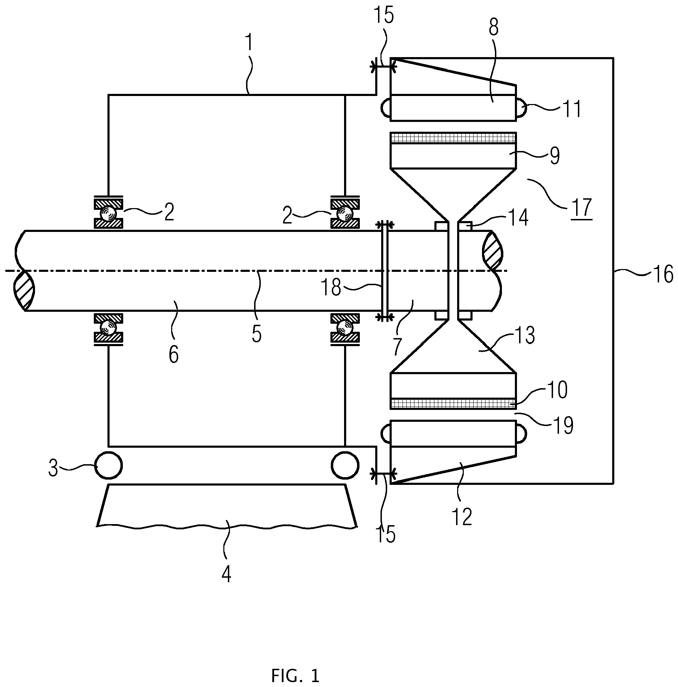

Die Erfindung sowie eine vorteilhafte Ausgestaltung der Erfindung ist der Figur zu entnehmen.

Die Figur zeigt einen Teillängsschnitt einer nicht näher dargestellten Windkraftanlage, wobei eine von der Windturbine bereitgestelltes Drehmoment über eine Windturbinenwelle 6, die sich über um eine Achse 5 dreht, einem Generator 17 zugeführt wird. Die Turbinenwelle 6 ist ausschließlich auf zwei Hauptlager 2 gehalten und fixiert, die in einem Maschinengehäuse 1 angeordnet sind. Das Maschinengehäuse 1 ist über ein Azimutlager 3 am Turm abgestützt. In axialer Verlängerung der Windturbinenwelle 6 befindet sich der Generator 17, der auf einer Tragkonstruktion 13 Rotorelemente aufweist. Der durch die Rotorelemente gebildete Rotor 9 weist dabei zu einem Luftspalt 19 des Generators 17 weisende Permanentmagnete 10 auf.

Diese Permanentmagnete 10 können dabei als Oberflächenmagnete oder "vergrabene Magnete" am Rotor 9 bzw. Rotorsegment angebracht sein. Oberflächenmagnete sind dabei Magnete, die an der Oberfläche des Rotors 9 oder Rotorsegments mittels Kleber und/oder Bandage gehalten sind. "Vergrabene Magnete" sind Magnete, die in im Wesentlichen axial verlaufenden, in Umfangsrichtung betrachtet geschlossenen Ausnehmungen beispielsweise durch Harz oder eine andere vorzugsweise magnetisch leitfähige Vergussmasse positioniert sind.

Radial an den Rotor 9 und Luftspalt 19 schließt sich ein Stator 8 mit seinem Wicklungssystem an, das an den Stirnseiten des Stators 8 Wickelköpfe 11 ausbildet. Der Stator 8 ist über eine Tragstruktur 12 am Maschinengehäuse 1 befestigt. Der gesamte Generator 17 ist durch eine Abdeckung 16 nach außen insbesondere gegen Witterungseinflüsse abgeschirmt.

Aufgrund dieses erfindungsgemäßen Anlagenkonzeptes ist es nunmehr lediglich erforderlich zwei Hauptlager 2 vorzusehen, wobei sich der Generator 17 in axialer Verlängerung der Windturbinenwelle 6 befindet. Der direkt angetriebene Generator 17 kann bereits vor Ort segmentweise zusammengebaut werden. Ebenso können die einzelnen Segmente des Generators 17 oben direkt bereits an die Turbinenwelle 6 über die Tragstruktur 13 des Rotors 9 und die Schnittstelle 14 an die Turbinenwelle 6 angebracht werden.

Alternativ dazu ist es möglich, auch einen Wellenstumpf 7, der als Welle des Generators 17 zu betrachten ist, im Werk oder vor Ort zu bestücken und dann den gesamten Generator 17 an die Turbinenwelle 6 über eine für diesen Fall notwendige Wellenverbindung 18 zu flanschen. Anschließend wird der Stator 8 über seine Befestigung 15 am Maschinengehäuse 1 fixiert.

Der Generator 17 weist bei jeder Ausführung kein eigenes Lager auf.

## Patentansprüche

1. Windkraftanlage mit einer Windturbine, die eine um eine Achse (5) drehbare Windturbinenwelle (6) und eine Welle eines Generators (17) aufweist, wobei der Generator (17) einen Stator (8) und einen Rotor (9) aufweist, wobei die Welle (7) des Generators (17) und die Windturbinenwelle (6) insbesondere einstückig ausgebildet und/oder achsfluchtend miteinander gekoppelt sind, wobei Windturbine und Generator (17) ausschließlich durch zwei Hauptlager (2) an der Windturbinenwelle (6) im Maschinengehäuse an der Spitze des Turmes der Windkraftanlage gelagert sind und wobei der Stator (8) am Maschinengehäuse (1) positioniert ist, **dadurch gekennzeichnet, dass** der Stator (8) am Maschinengehäuse (1) über zumindest eine einstellbare Befestigung (15) fixiert ist.

2. Windkraftanlage nach Anspruch 1, **dadurch gekennzeichnet, dass** der Rotor (9) Permanentmagnete aufweist, die zu einem Luftspalt (19) des Generators (17) weisen.

3. Windkraftanlage nach einem der vorhergehenden Ansprüche, **dadurch gekennzeichnet, dass** der Generator (17) in Umfangsrichtung des Generators (17) betrachtet segmentiert aufgebaut ist, wobei Stator (8) und/oder Rotor (9) jeweils segmentiert aufgebaut sind.

4. Windkraftanlage nach einem der vorhergehenden Ansprüche, **dadurch gekennzeichnet, dass** der Generator (17) auf der der Windturbine abgewandten Seite des Turmes der Windkraftanlage ist.

5. Verfahren zur Montage eines Generators (17) an eine Windkraftanlage nach Anspruch 1 durch folgende Schritte:
- korrespondierende Segmente von Stator (8) und Rotor (9) werden vorgefertigt und paarweise, d.h. jeweils ein Statorsegment und ein Rotorsegment mit einer Transportsicherung versehen, die insbesondere dem Luftspalt (19) des späteren Generators (17) entspricht,
- Zusammensetzen der Segmentpaare zu einem Generator (17) am Fuße der Windkraftanlage, wobei der Generator (17) dann als Ganzes an der axialen Verlängerung der Windturbinenwelle (6) fixiert wird,
- Fixieren der Statorsegmente am Maschinengehäuse (1) der Windkraftanlage und anschließendes Lösen der Transportsicherungen der Segmentpaare.

6. Verfahren zur Montage eines Generators (17) an eine Windkraftanlage nach Anspruch 1 durch folgende Schritte:
- korrespondierende Segmente von Stator (8) und Rotor (9) werden vorgefertigt und paarweise, d.h. jeweils ein Statorsegment und ein Rotorsegment mit einer Transportsicherung versehen, die insbesondere dem Luftspalt (19) des späteren Generators (17) entspricht,
- Ansetzen der Segmentpaare direkt an die Windturbinenwelle (6), wobei sich der Generator (17) an der axialen Verlängerung der Windturbinenwelle (6) Schritt für Schritt ergibt,
- Fixieren der Statorsegmente am Maschinengehäuse (1) der Windkraftanlage und anschließendes Lösen der Transportsicherungen der Segmentpaare.

7. Verfahren zur Montage eines Generators (17) an eine Windkraftanlage nach Anspruch 1 durch folgende Schritte:
- der Generator (17) wird im Werk vorgefertigt und mit einer Generatorwelle oder einer Tragstruktur des Rotors und vor Ort direkt an die axiale Verlängerung der Windturbinenwelle (6) gesetzt,
- Fixieren des Stators (8) am Maschinengehäuse (1) der Windkraftanlage.

## Claims

1. Wind turbine system comprising a wind turbine which has a wind turbine shaft (6) rotatable around an axis (5) and a shaft of a generator (17), wherein the generator (17) has a stator (8) and a rotor (9), wherein the shaft (7) of the generator (17) and the wind turbine shaft (6) are in particular formed as one piece and/or are coupled to each other axially aligned, wherein the wind turbine and generator (17) are supported exclusively by two main bearings (2) on the wind turbine shaft (6) in the machine housing at the top of the tower of the wind turbine system and wherein the stator (8) is positioned on the machine housing (1), **characterised in that** the stator (8) is fixed to the machine housing (1) by way of at least one adjustable fastening (15).

2. Wind turbine system according to claim 1, **characterised in that** the rotor (9) has permanent magnets which point to an air gap (19) of the generator (17).

3. Wind turbine system according to one of the preceding claims, **characterised in that** the generator (17), when viewed in the circumferential direction of the generator (17), is designed in segments, wherein stator (8) and/or rotor (9) are each designed in segments.

4. Wind turbine system according to one of the preceding claims, **characterised in that** the generator (17) is on the side of the tower of the wind turbine system facing away from the wind turbine.

5. Method for mounting a generator (17) onto a wind turbine system according to claim 1, **characterised by** the following steps:
- corresponding segments of stator (8) and rotor (9) are prefabricated and are provided in pairs, i.e. in each case a stator segment and a rotor segment with a transport securing device which in particular corresponds to the air gap (19) of the subsequent generator (17),
- assembly of the pairs of segments to form a generator (17) at the base of the wind turbine system, wherein the generator (17) is then fixed as a whole to the axial extension of the wind turbine shaft (6),
- fixing the stator segments to the machine housing (1) of the wind turbine system and subsequently removing the transport securing devices of the pairs of segments.

6. Method for mounting a generator (17) onto a wind turbine system according to claim 1, **characterised by** the following steps:
- corresponding segments of stator (8) and rotor (9) are prefabricated and are provided in pairs, i.e. in each case a stator segment and a rotor segment with a transport securing device which in particular corresponds to the air gap (19) of the subsequent generator (17),
- attaching the pairs of segments directly to the wind turbine shaft (6), wherein the generator (17) ensues step by step on the axial extension of the wind turbine shaft (6),
- fixing the stator segments to the machine housing (1) of the wind turbine system and subsequently removing the transport securing devices of the pairs of segments.

7. Method for mounting a generator (17) onto a wind turbine system according to claim 1, **characterised by** the following steps:
- the generator (17) is prefabricated in the factory and is placed with a generator shaft or a support structure of the rotor and on site directly onto the axial extension of the wind turbine shaft (6),
- fixing the stator (8) to the machine housing (1) of the wind turbine system.

## Revendications

1. Eolienne, comprenant une turbine éolienne, qui a un arbre (6) pouvant tourner autour d'un axe (5) et un arbre d'une génératrice (17), la génératrice (17) ayant un stator (8) et un rotor (9), l'arbre (7) de la génératrice (17) et l'arbre (6) de la turbine éolienne étant constitués notamment d'une seul pièce et/ou étant couplés entre eux en ayant leurs axes alignés, la turbine éolienne et la génératrice (17) étant supportées exclusivement par deux paliers (2) principaux sur l'arbre (6) de la turbine éolienne dans l'enveloppe de machine à la pointe de la tour de l'éolienne et le stator (8) étant placé sur l'enveloppe (1) de machine, **caractérisée en ce que** le stator (8) est immobilisé sur l'enveloppe (1) de machine par au moins une fixation (15) réglable.

2. Eolienne suivant la revendication 1, **caractérisée en ce que** le rotor (9) a des aimants permanents, qui sont tournés vers un entrefer (19) de la génératrice (17).

3. Eolienne suivant l'une des revendications précédentes, **caractérisée en ce que** la génératrice (17) est constituée de manière segmentée, considéré dans la direction périphérique de la génératrice (17), le stator (8) et/ou le rotor (9) étant constitués chacun de manière segmentée.

4. Eolienne suivant l'une des revendication précédentes, **caractérisée en ce que** la génératrice (17) est du côté, éloigné de la turbine éolienne, de la tour de l'éolienne.

5. Procédé de montage d'un générateur (17) sur une éolienne suivant la revendication 1, par les stades suivant :
- on fabrique à l'avance des segments correspondants de stator (8) et de rotor (9) et par paires, c'est-à-dire respectivement un segment de stator et un segment de rotor, on les munit d'une sécurité de transport, qui correspond notamment à l'entrefer (19) de la génératrice (17) ultérieure,
- on assemble les paires de segments en une génératrice (17) au pied de l'éolienne, la génératrice (17) étant ensuite immobilisée, en son entier, sur le prolongement axial de l'arbre (6) de la turbine éolienne,
- on immobilise les segments de stator sur l'enveloppe (1) de machine de l'éolienne et ensuite, on enlève les sécurités de transport des paires de segments.

6. Procédé de montage d'une génératrice (17) sur une éolienne suivant la revendication 1, par les stades suivants :
- on fabrique à l'avance des segments correspondants de stator (8) et de rotor (9) et par paires, c'est-à-dire respectivement un segment de stator et un segment de rotor, on les munit d'une sécurité de transport, qui correspond notamment à l'entrefer (19) de la génératrice (17) ultérieure,
- on met les paires de segments directement sur l'arbre (6) de la turbine éolienne, la génératrice (17) en résultant par stade sur le prolongement axial de l'arbre (6) de la turbine éolienne,
- on immobilise les segments de stator sur l'enveloppe (1) de machine de l'éolienne et, ensuite, on enlève les sécurités de transport des paires de segments.

7. Procédé de montage d'une génératrice (17) sur une éolienne suivant la revendication 1, par les stades suivants :
- on fabrique, à l'avance en usine, la génératrice (17) et on la met avec un arbre de la génératrice ou une structure porteuse du rotor et sur site directement sur le prolongement axial de l'arbre (6) de la turbine éolienne,
- on immobilise le stator (8) sur l'enveloppe (1) de machine de l'éolienne.
